(19) Europäisches Patentamt
European Patent Office
Office européen des brevets

(11) **EP 1 384 727 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**29.08.2012 Patentblatt 2012/35**

(51) Int Cl.:
***C08B 11/02*** *(2006.01)*    ***C08B 11/08*** *(2006.01)*

(45) Hinweis auf die Patenterteilung:
**02.07.2008 Patentblatt 2008/27**

(21) Anmeldenummer: **03016027.9**

(22) Anmeldetag: **15.07.2003**

(54) **Cellulosederivate mit gel-artigen rheologischen Eigenschaften und Verfahren zur Herstellung derselben**

Cellulose derivatives having gel-like rheological properties and process for making the same

Dérivés de cellulose ayant des propriétés rhéologiques de type gel et procédé de leur préparation

(84) Benannte Vertragsstaaten:
**AT BE BG CH CY CZ DE DK EE ES FI FR GB GR HU IE IT LI LU MC NL PT RO SE SI SK TR**

(30) Priorität: **25.07.2002 DE 10233788**

(43) Veröffentlichungstag der Anmeldung:
**28.01.2004 Patentblatt 2004/05**

(73) Patentinhaber: **Dow Global Technologies LLC Midland, MI 48674 (US)**

(72) Erfinder:
• **Schlesiger, Hartwig, Dr.**
  **29683 Bad Fallingbostel (DE)**
• **Kull, Arne Henning, Dr.**
  **29699 Bomlitz (DE)**
• **Klohr, Erik-Andreas, Dr.**
  **29664 Walsrode (DE)**

(74) Vertreter: **Polypatent**
  **Postfach 40 02 43**
  **51410 Bergisch Gladbach (DE)**

(56) Entgegenhaltungen:
| | |
|---|---|
| EP-A- 1 180 526 | EP-B1- 0 126 959 |
| US-A- 2 148 952 | US-A- 2 879 268 |
| US-A- 3 936 441 | US-A- 4 117 223 |
| US-A- 4 175 183 | US-A- 4 321 367 |

Bemerkungen:
Die Akte enthält technische Angaben, die nach dem Eingang der Anmeldung eingereicht wurden und die nicht in dieser Patentschrift enthalten sind.

EP 1 384 727 B2

**Beschreibung**

Die Erfindung betrifft Cellulosederivate mit gel-artigen Eigenschaften sowie ein Verfahren zu ihrer Herstellung.

Cellulosederivate finden aufgrund ihrer hervorragenden Eigenschaften und ihrer physiologischen Unbedenklichkeit vielseitig Anwendung, beispielsweise als Verdicker, Kleber, Binde- und Dispergiermittel, Wasserrückhaltemittel, Schutzkolloide, Stabilisatoren sowie als Suspendier- Emulgier- und Filmbildemittel.

Herkömmliche kommerziell erhältliche Cellulosederivate, die in Wasser löslich sind, wie z.B. Methylhydroxyethylcellulose, Methylhydroxypropylcellulose und Hydroxyethylcellulose zeigen ein charakteristisches rheologisches Profil welches sich an Hand von Materialfunktionen der wässrigen Lösung des Cellulosederivats beschreiben lässt. Wässrige Lösung bedeutet hierbei ein System, das Wasser, Cellulosederivat und, soweit vorhanden, Salze und Begleitstoffe aus dem Cellulosederivat und dem verwendeten Wasser, z.B. Leitungswasser, enthält.

Als Materialfunktionen werden üblicherweise die Viskosität $\eta$ als Funktion der Schergeschwindigkeit $\dot{\gamma}$ zur Beschreibung der Fließeigenschaften diskutiert, sowie der Speichermodul G' und der Verlustmodul G" jeweils als Funktion der Kreisfrequenz $\omega$ zur Beschreibung der linear-viskoelastischen Eigenschaften.

Die hier verwendeten Symbole folgen den Empfehlungen der Veröffentlichung: C. L. Sieglaff: "Proposed Nomenclature for Steady Shear Flow and Linear Viscoelastic Behavior", Transactions of the Society of Rheology 20:2 (1976) 311-317.

Im Falle der Viskosität wird in der Regel nicht die gesamte Funktion $\eta(\dot{\gamma})$ angegeben, sondern ein repräsentativer Viskositätswert, der unter definierten Bedingungen bezüglich der Konzentration des Cellulosederivats in der wässrigen Lösung, der Temperatur und der Schergeschwindigkeit bzw. des verwendeten Messgerätes und der Geräteeinstellungen bestimmt wird. Dieses Vorgehen ist dem Fachmann gut bekannt. Allgemein bekannt ist auch, dass in den meisten Fällen die Viskosität der wässrigen Lösung eines Cellulosederivats mit steigender Schergeschwindigkeit abnimmt, die wässrigen Lösungen somit ein pseudoplastisches Fließverhalten aufweisen.

Die linear-viskoelastischen Eigenschaften werden durch Messungen in einer oszillierenden Scherströmung bei kleiner Amplitude und variabler Kreisfrequenz ermittelt. Die Werte für G' und G" werden dabei stark von der Konzentration der Cellulosederivate in der wässrigen Lösung und von der Höhe des repräsentativen Viskositätswertes bestimmt. Es wird daher nachfolgend nur auf den relativen Verlauf von G' und G" mit steigender Kreisfrequenz $\omega$ eingegangen. Bei einer Konzentration von 1,5 bis 2 Gewichtsteilen Cellulosederivat auf 100 Gewichtsteile der wässrigen Lösung und einer Temperatur von ca. 20 ˚C verlaufen G' und G" für die Cellulosederivate nach dem Stand der Technik in der Weise, dass bei kleiner Kreisfrequenz $\omega$ der Speichermodul G' kleiner als der Verlustmodul G" ist, mit steigender Kreisfrequenz G' aber stärker zunimmt als G". Dabei kann auch der Fall eintreten, dass G' oberhalb einer bestimmten Kreisfrequenz schließlich größer wird als G", die Lösung bei hohen Werten der Kreisfrequenz somit vorwiegend elastisch reagiert.

Für herkömmliche Cellulosederivate ist in wässriger Lösung die Abhängigkeit von der Kreisfrequenz demnach für G' deutlich größer als für G"; insbesondere hängen die linear-viskoelastischen Materialfunktionen Speichermodul G' und Verlustmodul G" im Bereich der Kreisfrequenz $\omega$ von 0,1 s$^{-1}$ bis 1 s$^{-1}$ in der Weise von der Kreisfrequenz ab, dass die Exponenten n und m der Beziehungen

(1) G'$\alpha$ $\omega^n$ (Speichermodul verhält sich proportional zur Kreisfrequenz hoch n) und

(2) G" $\propto$ $\omega^m$ (Verlustmodul verhält sich proportional zur Kreisfrequenz hoch m) deutlich verschieden sind, wobei für die Celluloseether nach dem Stand der Technik das Verhältnis von n zu m mehr als 1,20 beträgt.

Eine optimale Einstellung der rheologischen Eigenschaften wässriger Systeme kann neben der durch den Einsatz von Cellulosederivaten möglichen Viskositätserhöhung auch die Ausbildung gel-artiger Eigenschaften erfordern. Hier bieten zum Beispiel Methylhydroxyethylcellulose oder Methylhydroxypropylcellulose, die in Wasser einen thermischen Flockungspunkt aufweisen, die Möglichkeit, temperaturabhängig Gele zu bilden, siehe N. Sarkar: "Kinetics of thermal gelation of methylcellulose and hydroxypropylmethylcellulose in aqueous solutions", Carbohydrate Polymers 26 (1995) 195-203. Die Abhängigkeit von der Kreisfrequenz ist für G' in gel-artigen Systemen nicht mehr deutlich größer als für G".

Die gel-artigen Eigenschaften nur durch die Nutzung des thermischen Flockungspunktes unter Einstellung bestimmter Temperaturen erreichen zu können, bedeutet für die Verwendung von Cellulosederivaten eine deutliche Einschränkung in doppelter Hinsicht: Erstens ist es erforderlich, bei der Anwendung mit einem gewissen Aufwand die zum Erreichen der gel-artigen Eigenschaften geeigneten Temperaturen einzustellen. Zweitens ist die Auswahl der Cellulosederivate auf die Produkte beschränkt, die im gewünschten Temperaturbereich einen Flockungspunkt aufweisen.

Der teilweise oder vollständige Ersatz von Cellulosederivaten durch andere Hydrokolloide, die in der Lage sind, gel-artige Eigenschaften zu erreichen, ist oft nicht wünschenswert, da dadurch bestimmte Eigenschaften der Cellulosederivate, wie z.B. gute Wasserrückhaltung, nicht mehr voll zur Verfügung stehen. Auch basieren solche Hydrokolloide im allgemeinen nicht auf nachwachsenden Rohstoffen oder sind nicht biologisch abbaubar.

Es besteht daher ein Bedarf nach Cellulosederivaten, die in wässriger Lösung gel-artige rheologische Eigenschaften besitzen, ohne dass die Zugabe weiterer Stoffe oder eine besondere Temperaturführung erforderlich sind.

So beschreibt bereits die GB 513,917 ein Verfahren zur Herstellung wasserlöslicher Celluloseether welche mit einem bifunktionellen Reagenz vernetzt werden. Ziel der GB 513,917 war es, Celluloseether herzustellen, die eine ungewöhnlich hohe Viskosität in Wasser aufweisen. Bevorzugt zeigen die Produkte einen Viskositätsanstieg von 400 %.

Die US 4,321,367 beschreibt ebenfalls ein Verfahren zur Herstellung vernetzter Celluloseether, erneut mit dem Ziel Produkte mit erhöhter Viskosität in wässriger Lösung bereitzustellen. Bevorzugt wird die Viskosität einer 2 Gew.-%igen Lösung um mindestens 50 % angehoben, in der am meisten bevorzugten Variante wird die Viskosität einer 2 Gew.-%igen Lösung um mindestens 100 % angehoben.

Zum Reaktionsgemisch wird als Additiv u.a. ein Tensid gegeben, um die Verteilung der Reaktanden zu erreichen.

Die in diesen Schriften beschriebenen Verfahren sind teilweise mehrstufig, benötigen zusätzliche Additive wie Tenside und liefern nur geringe Ausbeuten bzgl. des Vernetzungsreagenzes. Die Viskosität der Celluloseether wird gegenüber den unvernetzten Celluloseethern extrem stark angehoben, wodurch die Versuchsergebnisse solcher Verfahren kaum reproduzierbar werden.

Aus diesen Gründen sind aus dieser Produktgruppe bisher keine kommerziell anwendbaren Produkte entstanden.

Aufgabe dieser Erfindung war es, entsprechende Cellulosederivate zu entwickeln, die in einer Lösung aus 1,5 bis 2,0 Gewichtsteilen des Celluloseethers auf 100 Gewichtsteile Lösung bei einer Temperatur von 20°C +/- 1°C, und bei Verwendung von Wasser ohne weitere Zusätze als Lösungsmittel, gel-artige rheologischen Eigenschaften besitzen, und zwar sollen sich die gel-artigen Eigenschaften direkt bei der Temperatur einstellen, bei der das Cellulosederivat in Lösung gebracht werden kann. Weiterhin soll keine Zugabe weiterer Stoffe erforderlich sein, um die gel-artigen Eigenschaften der Lösung zu erhalten.

Der Begriff "gel-artige rheologische Eigenschaften" wird hier durch die Abhängigkeit der linear-viskoelastischen Materialfunktionen Speichermodul G' und Verlustmodul G" von der Kreisfrequenz $\omega$ definiert, angelehnt an die Definition des "Gelpunktes" bekannt aus Arbeiten von Chambon und Winter [siehe: F. Chambon, H. H., Winter: "Linear Viscoelasticity at the Gel Point of a Crosslinking PDMS with Imbalanced Stoichometry", Journal of Rheology 31 (8) (1987) 683-697]; dort wird der Gelpunkt als der Punkt beschrieben, wo die Frequenzabhängigkeit für G' und G" nach den Beziehungen:

(1) $G' \propto \omega^n$ (Speichermodul verhält sich proportional zur Kreisfrequenz hoch n) und
(2) $G" \propto \omega^m$ (Verlustmodul verhält sich proportional zur Kreisfrequenz hoch m)

beschrieben werden kann und die Exponenten n und m gleich groß sind, bzw. das Verhältnis von n zu m einen Wert von 1 erreicht. Die Werte von G' und G" können dabei verschieden sein, es kommt nur darauf an, dass der Logarithmus von G' und der Logarithmus von G" jeweils aufgetragen gegen den Logarithmus von $\omega$ dieselbe Steigung aufweisen, wobei wir hier nur den Bereich der Kreisfrequenz $\omega$ von 0,1 s$^{-1}$ bis 1 s$^{-1}$ betrachten. Dieser Definition folgend, sollen die Cellulosederivate mit gel-artigen rheologischen Eigenschaften ein Verhältnis von n zu m aurweisen, das nahe bei 1 liegt beziehungsweise diesem Wert deutlich näher kommt als dies für die herkömmlichen Cellulosederivate der Fall ist; insbesondere sollte das Verhältnis von n zu m kleiner als oder gleich 1,20 sein. Um die Forderung nach einem Verhältnis von n zu m nahe bei 1 gleichmäßig zu erfüllen, sollte das Verhältnis von n zu m größer oder gleich 0,80 sein. Die Aufgabenstellung für diese Erfindung besteht somit darin, Celluloseether zu entwickeln, für die das Verhältnis von n zu m unter den beschriebenen Bedingungen von 0,80 bis 1,20 beträgt.

Diese Anforderung konnte nun überraschend durch die Herstellung spezieller irreversibel vernetzter Cellulosederivate erfüllt werden.

Gegenstand dieser Erfindung sind daher Celluloseether mit gel-artigen rheologischen Eigenschaften in wässriger Lösung, dadurch erhältlich, dass man

a) Cellulose mit wässriger Alkalihydroxid-Lösung in Gegenwart eines Suspensionsmittels alkalisiert,
b) die alkalisierte Cellulose mit einem oder mehreren Alkylenoxiden reagieren lässt,
c) dann mit einem im Suspensionsmittel enthaltenen Alkylhalogenid umsetzt
d) anschließend oder gleichzeitig die alkalisierte Cellulose mit einem Vernetzungsmittel in einer Menge von 0,0001 bis 0,005 eq, wobei die Einheit "eq" für das molare Verhältnis des Vernetzungsmittels relativ zur Anhydroglucoseeinheit (AGU) der eingesetzten Cellulose steht, umsetzt, und
e) nach gegebenenfalls weiterer Zugabe von Alkalihydroxid und/oder Alkylierungsmittel das erhaltene irreversibel vernetzte Cellulosederivat aus dem Reaktionsgemisch abtrennt, gegebenenfalls reinigt und trocknet.

Die erfindungsgemäßen Celluloseether mit gel-artigen rheologischen Eigenschaften zeichnen sich dadurch aus, dass die linear-viskoelastischen Materialfunktionen Speichermodul G' und Verlustmodul G" einer Lösung aus 1,5 bis 2,0 Gewichtsteilen des Celluloseethers auf 100 Gewichtsteile Lösung bei einer Temperatur von 20° C +/- 1° C, und bei Verwendung von Wasser ohne weitere Zusätze als Lösungsmittel, im Bereich der Kreisfrequenz $\omega$ von 0,1 s$^{-1}$ bis 1 s$^{-1}$ in der Weise von der Kreisfrequenz abhängen, dass die Exponenten n und m der Beziehungen

(1) G' $\propto \omega^n$ (Speichermodul verhält sich proportional zur Kreisfrequenz hoch n) und
(2) G" $\propto \omega^m$ (Verlustmodul verhält sich proportional zur Kreisfrequenz hoch m)

in etwa gleich groß sind, wobei für die Celluloseether nach dieser Erfindung das Verhältnis von n zu m von 0,80 bis 1,20 beträgt.

Die linear-viskoelastischen Materialfunktionen G' und G" einer wässrigen Lösung der Celluloseether werden mit Hilfe eines kommerziell erhältlichen Rotations- und Oszillationsrheometers im Oszillationsmodus bestimmt. Ein solches Rheometer ist ein Messgerät, mit dem für eine Probe, wie hier Celluloseetherlösung, der Zusammenhang von mechanischer Deformation und mechanischer Spannung ermittelt werden kann, wobei je nach Bauart des Rheometers Deformation oder Spannung vorgegeben werden und die jeweils andere Größe gemessen wird. Dazu wird eine geeignete Menge der Celluloseetherlösung in die Messvorrichtung eingebracht. Besonders geeignete Messvorrichtungen sind Kombinationen aus Platte und Kegel oder Platte und Platte. Messvorrichtungen aus Becher und Zylinder sind prinzipiell ebenfalls geeignet, jedoch wegen des in der Regel höheren Trägheitsmoments des Drehkörpers für Messungen im Oszillationsmodus nicht ideal.

Nach dem Einfüllen wird die Celluloseetherlösung für einige Zeit temperiert, um definierte Randbedingungen für die Messung einzustellen.

Die Messung im Oszillationsmodus erfolgt dann in der Weise, dass mit Hilfe der Rheometersteuerung eine im Laufe der Zeit (Zeit dargestellt durch das Symbol: t) sinusförmig oszillierende Scherdeformation $\gamma^*$ der Probe eingestellt wird, charakterisiert durch die Deformationsamplitude $\gamma_0$ und die Kreisfrequenz $\omega$:

$$\gamma^* = \gamma_0 \sin(\omega t)$$

Die Deformationsamplitude $\gamma_0$ beschreibt die maximal während der Oszillation auftretende Deformation, das heißt, $\gamma^*$ wechselt während eines Oszillationszyklus zwischen den Extremwerten $+\gamma_0$ und $-\gamma_0$. Die Dauer eines vollständigen Oszillationszyklus beträgt $2\pi$ mal den Kehrwert der Kreisfrequenz $\omega$, das heißt die Oszillation erfolgt in kürzerer Zeit, je höher die Kreisfrequenz eingestellt wird.

Die bei diesem Vorgang erzeugte mechanische Spannung $\sigma^*$ oszilliert mit der Spannungsamplitude $\sigma_0$, ebenfalls sinusförmig im Laufe der Zeit und mit gleicher Kreisfrequenz wie die Deformation $\gamma^*$, jedoch verschoben um den Phasenwinkel $\delta$:

$$\sigma^* = \sigma_0 \sin(\omega t + \delta)$$

Der Phasenwinkel nimmt je nach den viskoelastischen Eigenschaften der Probe Beträge von 0 bis $\pi/2$ an, wobei $\delta = 0$ den Grenzfall für ideales rein elastisches Verhalten darstellt und $\delta = \pi/2$ den Grenzfall für ideales rein viskoses Verhalten.

Die Ermittlung linear-viskoelastischer Materialfunktionen erfordert, dass zuvor der Bereich der Deformationsamplitude $\gamma_0$ ermittelt wird, wo für die zu untersuchende Probe ein linearer Zusammenhang zwischen Deformationsamplitude und Spannungsamplitude besteht und sich der Phasenwinkel mit der Deformationsamplitude praktisch nicht ändert. Diese Bedingungen sind in der Regel gut erfüllt, wenn die Deformationsamplitude ausreichend klein gewählt wird.

Die Daten können dann direkt in die linear-viskoelastischen Materialfunktionen Speichermodul G' und Verlustmodul G" umgerechnet werden:

$$G' = \sigma_0/\gamma_0 \cos \delta$$

(Speichermodul ist gleich Spannungsamplitude geteilt durch Deformationsamplitude, multipliziert mit dem Kosinus des Phasenwinkels) und

$$G'' = \sigma_0/\gamma_0 \, \sin \delta$$

(Verlustmodul ist gleich Spannungsamplitude geteilt durch Deformationsamplitude, multipliziert mit dem Sinus des Phasenwinkels)

Bei konstanter Temperatur hängen G' und G'' für eine gegebene Celluloseetherlösung nur von der Kreisfrequenz $\omega$ ab. An Hand des Verlaufes der linear-viskoelastischen Materialfunktionen Speichermodul G' und Verlustmodul G'' bei Variation der Kreisfrequenz $\omega$ lassen sich herkömmliche Celluloseether und Celluloseether mit gel-artigen rheologischen Eigenschaften eindeutig unterscheiden.

Es wurde überraschend festgestellt, dass die gel-artigen rheologischen Eigenschaften der erfindungsgemäßen Celluloseether sowohl für Lösungen in Wasser ohne weitere Zusätze gefunden werden, als auch für Lösungen in einem Lösungsmittel aus 98 Gewichtsteilen Wasser und 2 Gewichtsteilen Natriumhydroxid je 100 Gewichtsteilen Lösungsmittel.

Dabei weisen die Lösungen der erfindungsgemäßen Celluloseether für die Exponenten n und m der Beziehungen

(1) $G' \propto \omega^n$ (Speichermodul verhält sich proportional zur Kreisfrequenz hoch n) und

(2) $G'' \propto \omega^m$ (Verlustmodul verhält sich proportional zur Kreisfrequenz hoch m)

ein Verhältnis von n zu m auf, das im Bereich von 0,80 bis 1,20 liegt, insbesondere von 0,85 bis 1,20. Für bevorzugte Celluloseether nach dieser Erfindung beträgt das Verhältnis von n zu m 0,88 bis 1,18, besonders bevorzugt von 0,90 bis 1,15. Noch weiter bevorzugte Celluloseether weisen ein Verhältnis von n zu m von 0,95 bis 1,15 auf; das Verhältnis von n zu m für die am meisten bevorzugten Celluloseether liegt im Bereich von 0,98 bis 1,12.

Ebenfalls überraschend ist die geringe Änderung des Verhältnisses von n zu m beim Wechsel des Lösungsmittels. Dabei wirkt sich die Auswahl der Lösungsmittel

A: Wasser

oder

B: 98 Gewichtsteile Wasser und 2 Gewichtsteile Natriumhydroxid je 100 Gewichtsteilen Lösungsmittel

nur wenig auf das Verhältnis der beiden Exponenten n und m aus, wobei die Differenz des Verhältnisses von n zu m im Lösungsmittel A zum Verhältnis von n zu m im Lösungsmittel B unter ansonsten identischen Bedingungen weniger beträgt als 20 von 100 des Mittelwertes aus dem Verhältnis von n zu m im Lösungsmittel A und dem Verhältnis von n zu m im Lösungsmittel B. Für bevorzugte Celluloseether nach dieser Erfindung beträgt die entsprechende Differenz weniger als 15 von 100, besonders bevorzugt weniger als 10 von 100 und für die am meisten bevorzugten Celluloseether weniger als 8 von 100 des Mittelwertes aus dem Verhältnis von n zu m im Lösungsmittel A und dem Verhältnis von n zu m im Lösungsmittel B.

Dieses rheologische Profil kann durch Cellulosederivate eingestellt werden, welche mit einem oder mehreren polyfunktionellen Reagenzien (auch Vernetzungsmittel genannt) irreversibel vernetzt wurden. Die Vernetzung kann vor oder nach der Veretherungsreaktion zum wasserlöslichen Cellulosederivat durchgeführt werden. Bevorzugt ist jedoch die gleichzeitige Veretherung mit Reagenzien die anschließend die Wasserlöslichkeit bewirken und dem Vernetzungsmittel.

Im Gegensatz zur irreversiblen Vernetzung mit einem Vernetzungsmittel wird die reversible Vernetzung mit Aldehyden wie z.B. Glyoxal während des Löseprozesses in Wasser wieder aufgehoben. Die erfindungsgemäßen irreversibel vernetzten Cellulosederivate können gegebenenfalls zusätzlich reversibel vernetzt also lösungsverzögert werden.

Als Vernetzungsmittel können polyfunktionelle Verbindungen eingesetzt werden, wobei bevorzugt Verbindungen eingesetzt werden, die über Halogengruppen oder Epoxygruppen oder ungesättigte Gruppen verfügen, so dass bei der Umsetzung Etherbindungen geknüpft werden. Bevorzugt werden bifunktionelle Verbindungen aus der Gruppe 1,2-Dichlorethan, 1,3-Dichlorpropan, Dichlordiethylether, Diglycidylether, Phosphonsäurediglycidylester, Divinylsulfon eingesetzt. Verbindungen die zwei unterschiedliche funktionelle Gruppen tragen können ebenfalls eingesetzt werden. Beispiele hierfür sind Glycidylmethacrylat, Epichlorhydrin und Epibromhydrin. Besonders bevorzugtes Vernetzungsmittel ist Epichlorhydrin.

Die Einsatzmenge des Vernetzungsmittels beträgt 0,0001 bis 0,005 eq, wobei die Einheit "eq" für das molare Verhältnis des jeweiligen Vernetzungsmittels relativ zur Anhydroglucoseeinheit (AGU) der eingesetzten Cellulose steht.

Die bevorzugte Einsatzmenge des Vernetzungsmittels beträgt 0,0005 bis 0,005 eq. .Die besonders bevorzugte Einsatzmenge des Vernetzungsmittels beträgt 0,001 bis 0,005 eq.

Bei den erfindungsgemäßen Cellulosederivaten handelt es sich um Celluloseether, deren Wasserlöslichkeit durch die Veretherung mit Hydroxyalkylgruppen und/oder mit Alkylgruppen erreicht wird. Insbesondere die MC wird als Mischether mit Hydroxyalkylgruppen eingesetzt (Methylhydroxyalkylcellulosen). Als Mischether der Methylcellulose sind hier insbesondere die Methylhydroxyethylcellulose (MHEC), die Methylhydroxypropylcellulose (MHPC) und die Methylhydroxyethylhydroxypropylcellulose (MHEHPC) zu nennen.

Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsubstitution wird beispielsweise als DS (Methyl) oder DS (M) angegeben.

Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben.

Die Bestimmung der Seitengruppen erfolgt anhand der Zeisel-Methode (Literatur: G. Bartelmus und R. Ketterer, Z. Anal. Chem. 286 (1977) 161-190).

Bevorzugt werden die Mischether der Methylcellulose für die Vernetzung genutzt, wobei im Falle der MHEC bevorzugt DS (M)-Werte von 1,2 bis 2,1 und MS (HE)-Werte von 0,05 bis 0,75 eingestellt werden. Besonders bevorzugt werden im Falle der MHEC DS (M)-Werte von 1,3 bis 1,7 und MS (HE)-Werte von 0,15 bis 0,45 eingestellt. Am meisten bevorzugt werden im Falle der MHEC DS (M)-Werte von 1,35 bis 1,60 und MS (HE)-Werte von 0,20 bis 0,40 eingestellt.

Im Falle der MHPC als Mischether der Methylcellulose werden bevorzugt DS (M)-Werte von 1,2 bis 2,1 und MS (HP)-Werte von 0,1 bis 1,5 eingestellt. Besonders bevorzugt werden im Falle der MHPC DS (M)-Werte von 1,3 bis 2,0 und MS (HP)-Werte von 0,2 bis 1,2 eingestellt.

Als Ausgangsmaterial für die Veretherung geeignet sind gemahlener Holzzellstoff und gemahlene Linters-Cellulose oder Mischungen aus diesen.

Die Erfindung betrifft auch ein Verfahren zur Herstellung von irreversibel vernetzten Methylhydroxyalkylcellulosen aus Cellulose und Alkylierungsmitteln in Gegenwart von Alkalihydroxid und einem oder mehreren Suspensionsmitteln sowie die Separierung und Reinigung der Umsetzungsprodukte bevorzugt durch Heißwasserwäsche oder Wäsche mit organischen Medien.

Die Erfindung bezieht sich daher auf ein Verfahren zur Herstellung eines Cellulosederivates, dadurch gekennzeichnet, dass man

a) Cellulose mit wässriger Alkylihydroxid-Lösung in Gegenwart eines Suspensionsmittels alkalisiert,

b) die alkalisierte Cellulose mit einem oder mehreren Alkylenoxiden reagieren lässt,

c) dann mit einem im Suspensionsmittel enthaltenen Alkylhalogenid umsetzt,

d) anschließend oder gleichzeitig die alkalisierte Cellulose mit einem Vemetzungsmittel in einer Menge von 0,0001 bis 0,005 eq, wobei die Einheit "eq" für das molare Verhältnis des Vernetzungsmittel relativ zur Anhydroglucoseeinheit (AGU) der eingesetzten Cellulose steht, umsetzt, und

e) nach gegebenenfalls weiterer Zugabe von Alkalihydroxid, und/oder Alkylierungsmittel das erhaltene irreversibel vernetzte Cellulosederivat aus dem Reaktionsgemisch abtrennt, gegebenenfalls reinigt und trocknet.

Die Alkalisierung (Aktivierung) der Cellulose erfolgt mit Alkalihydroxiden in wässriger Lösung, wie Natriumhydroxid und Kaliumhydroxid, bevorzugt mit 35 bis 60 Gew.-%iger Natronlauge, besonders bevorzugt mit 48 bis 52 Gew.-%iger Natronlauge. Jedoch ist auch der Einsatz von festem Alkalihydroxid z.B. in Form von Granulaten (Prills) möglich.

Die Alkalisierung wird bevorzugt in Gegenwart von Suspensionsmitteln durchgeführt. Als Suspensionsmittel können Dimethylether (DME), $C_5$-$C_{io}$-Alkane, wie z.B. Cyclohexan oder Pentan, Aromaten, wie z.B. Benzol oder Toluol, Alkohole, wie z.B. i-Propanol oder t-Butanol, Ketone, wie z.B. Butanon oder Pentanon, offenkettige oder cyclische Ether, wie z.B. Dimethoxyethan oder 1,4-Dioxan, sowie Mischungen der angeführten Suspensionsmittel in wechselnden Mengenverhältnissen eingesetzt werden. Das besonders bevorzugte Suspensionsmittel ist Dimethylether (DME).

Gegebenenfalls enthält das Suspensionsmittel bereits während der Alkalisierung Teile der zur späteren Alkylierung benötigten Menge Alkylierungsmittel, bevorzugt Alkylhalogenid.

Für die Alkylierung eignen sich geradkettige oder verzweigte $C_1$ bis $C_6$-Alkylhalogenide, wie z.B. bevorzugt Methylchlorid (MC1), Ethylchlorid, Ethylbromid und Propylhalogenide, wie z.B. Propyljodid. Bevorzugt sind Methylchlorid und Ethylchlorid, besonders bevorzugt ist Methylchlorid. Ebenso können Alkylierungsreagenzien mit ionischen Funktionalitäten, wie z.B. Monochloressigsäure, N-(2-Chlorethyl)diethylamin und Vinylsulfonsäure, verwendet werden. Geeignete Reagenzien zum Einführen von Hydroxyalkylgruppierungen sind bevorzugt Ethylenoxid (EO), Propylenoxid (PO), Butylenoxid (BO). Besonders bevorzugt sind Ethylenoxid und Propylenoxid.

Die alkalisierte Cellulose wird dann mit einem oder mehreren Alkylenoxiden sowie mit dem im Suspensionsmittel enthaltenen Alkylhalogenid, bevorzugt Methylchlorid bei einer Temperatur größer 65°C umsetzt.

Gleichzeitig wird die alkalisierte Cellulose mit einem oder mehreren polyfunktionellen Reagenzien umgesetzt. Das Vernetzungsmittel kann zu verschiedenen Zeitpunkten zum Reaktionsgemisch dosiert werden. So ist die Dosierung vor, während oder nach der Alkalisierung sowie während der Aufheizphase oder in der Hydroxyalkylierungsphase möglich. Bevorzugt wird das Vernetzungsmittel vor oder nach der Alkalisierung zum Reaktionsgemisch dosiert.

Das Vernetzungsmittel kann pur oder verdünnt mit inertem Suspensionsmittel oder verdünnt mit Alkylhalogenid oder Hydroxyalkylierungsmittel zugegeben werden. Bevorzugt wird das Vernetzungsmittel gelöst in inertem Suspensionsmittel oder gelöst in Methylchlorid oder einem Gemisch aus inertem Suspensionsmittel und Methylchlorid zugegeben.

Im Anschluss an die Hydroxyalkylierung wird insbesondere Alkylhalogenid in einer Menge aus mindestens der Differenz zwischen der bereits zudosierten Menge an Equivalenten Alkylhalogenid pro AGU und der insgesamt zudosierten Menge Alkalihydroxid pro AGU, wobei diese Menge minimal 0,2 Equivalente pro AGU beträgt, zudosiert. Gegebenenfalls wird weiteres Alkalihydroxid, bevorzugt eingesetzt als wässrige Lauge, zudosiert, wobei die Dosierung des Alkalihydroxid auch vor der Zugabe der zweiten Mengen Alkylhalogenid geschehen kann.

Bei Verwendung von Methylchlorid (MC1) werden im Folgenden die erste, mit dem Suspensionsmittel eingebrachte Menge Alkylhalogenid auch MCl I, und die zweite, im Anschluss an die Hydroxyalkylierung zudosierte Menge Alkylhalogenid auch MC1 II genannt.

Das erhaltene Cellulosederivat wird aus dem Reaktionsgemisch isoliert und gegebenenfalls gereinigt.

Anschließend wird das Cellulosederivat nach Methoden gemäß dem Stand der Technik in ein pulverförmiges Produkt überführt.

Bei der praktischen Durchführung des Verfahrens wird gemahlene oder zerfaserte Cellulose im Regelfall inertisiert vorgelegt. Anschließend wird das cellulosische Substrat in einem Gemisch aus DME/MC1 I suspendiert, wobei das Verhältnis DME/MC1 I 90/10 bis 20/80 Gewichtsteile, bevorzugt 80/20 bis 40/60 Gewichtsteile und besonders bevorzugt 70/30 bis 50/50 Gewichtsteile beträgt. Die Menge an MC1 I im ersten Prozess-Schritt ist wie folgt charakterisiert, wobei die Einheit "eq" für das molare Verhältnis des jeweiligen Einsatzstoffes relativ zur Anhydroglucoseeinheit (AGU) der eingesetzten Cellulose steht: minimal eq MC1 I = eq NaOH pro AGU minus 1,4 sowie maximal eq MC1 I = eq NaOH pro AGU plus 0,8. Die bevorzugte Menge an MC1 I im ersten Prozess-Schritt beträgt: minimal eq MC1 I = eq NaOH pro AGU minus 1,0 sowie maximal eq MC1 I = eq NaOH pro AGU plus 0,3. Die besonders bevorzugte Menge an MC1 I im ersten Prozess-Schritt beträgt: minimal eq MC1 I = eq NaOH pro AGU minus 0,5 sowie maximal eq MC1 I = eq NaOH pro AGU plus 0,1. Die am meisten bevorzugte Menge an MC1 I im ersten Prozess-Schritt beträgt minimal eq MC1 I = eq NaOH pro AGU minus 0,5 sowie maximal eq MC1 I = eq NaOH pro AGU minus 0,1.

Das Vernetzungsmittel Epichlorhydrin wird bevorzugt in MC1 oder DME/MCI-Gemisch gelöst und dem Reaktionsgemisch zusammen mit dem restlichen Suspensionsmittel zugegeben. Die zum Lösen des Vernetzungsmittels verwendete Menge MC1 oder DME/MC1-Gemisch wird bevorzugt dem Suspensionsmittel zuvor vorenthalten.

Die Alkalisierung der eingesetzten Cellulose erfolgt mit 1,5 bis 5,5 eq NaOH pro AGU, bevorzugt mit 1,9 bis 3,0 eq NaOH pro AGU, besonders bevorzugt mit 2,2 bis 2,9 eq NaOH pro AGU. In der Regel wird die Alkalisierung bei Temperaturen von 15 bis 50°C, bevorzugt um 40°C, und während 20 bis 80 Minuten, bevorzugt während 30 bis 60 Minuten, durchgeführt. Bevorzugt wird das NaOH in Form einer 35 bis 60 gewichtsprozentigen wässrigen Lösung eingesetzt, besonders bevorzugt als 48 bis 52 Gew.-%ige Natronlauge.

Nach der Alkalisierungsphase wird das Hydroxyalkylierungsmittel, z.B. Propylenoxid (PO) oder Ethylenoxid (EO) zudosiert und die Reaktion thermisch gegebenenfalls durch Aufheizen forciert. Die Zugabe des Hyxdroxyalkylierungsmittels kann auch während der Aufheizphase geschehen. Die Reaktion mit dem Hydroxyalkylierungsmittel dem Vernetzungsmittel und MC1 I erfolgt z.B. bei 60 bis 110°C, bevorzugt bei 70 bis 90°C, besonders bevorzugt bei 75 bis 85°C. Je nach angestrebter Substitutionshöhe wird die Zugabemenge an Hydroxyalkylierungsmittel gezielt eingestellt. Die anzuwendende Menge Hydroxyalkylierungsmittel liegt bei 0,1 bis 5 eq pro AGU, bevorzugt bei 0,2 bis 2,5 eq pro AGU. Die Zugabe des Alkylenoxids zum Reaktionssystem kann in einem oder portioniert in mehreren Dosierschritten erfolgen, bevorzugt ist die Dosierung in einem Schritt, besonders bevorzugt in einem Schritt direkt im Anschluss an die Alkalisierungsphase.

Nach der ersten Veretherungsphase wird ohne wesentliche Abkühlung die für die gewünschte Substitution mit Methylgruppen erforderliche Menge MC1 II zugegeben, die wie folgt charakterisiert ist: minimal eq MC1 II = eq NaOH minus eq MC1 I plus 0,3, oder minimal eq MC1 II = 0,2 eq MC1 pro AGU, wenn die nach der vorangegangenen Formel berechnete Menge MC1 II kleiner als 0,2 eq MC1 pro AGU ist. Bevorzugt werden eq MC1 II = 1 bis 3,5 eq MC1 pro AGU, besonders bevorzugt eq MC1 II = 1,5 bis 2,5 eq MC1pro AGU eingesetzt. Die Zugabe der Menge MC1 II erfolgt bei einer Temperatur größer 65°C, bevorzugt bei 75 bis 90°C, beziehungsweise bei der Temperatur, die am Ende der Hydroxyalkylierungsphase herrscht. Gegebenenfalls wird weiteres Alkalihydroxid, bevorzugt eingesetzt als wässrige Lauge, zudosiert, wobei die Dosierung des Alkalihydroxid auch vor der Zugabe der Menge MC1 II geschehen kann.

Nach Ende der zweiten Veretherungsphase werden alle flüchtigen Bestandteile destillativ unter ggf. Anwendung von vermindertem Druck abgetrennt. Die Reinigung, Trocknung und Mahlung des resultierenden Produktes erfolgt nach den in der Cellulosederivat-Technologie üblichen Methoden gemäß dem Stand der Technik.

Die nachfolgenden Beispiele sollen das erfindungsgemäße Verfahren erläutern und die resultierenden Produkte beschreiben, ohne die Erfindung zu beschränken:

## Beispiele

### Beispiel 1 (Vergleichsbeispiel)

In einem 400 l Autoklaven werden 17,7 kg gemahlener Holzzellstoff (Feuchte: 3,6 Gew.-%; GVZ in Cuen: 1558 ml/g) und 17,7 kg gemahlene Baumwoll-Linters (Feuchte: 4,2 Gew.-%; GVZ in Cuen: 1753 ml/g) durch Evakuieren und Beaufschlagen mit Stickstoff inertisiert. Anschließend wird ein Gemisch aus 52,9 kg Dimethylether und 2,0 mol eq Chlormethan in den Reaktor dosiert. Dann werden 2,2 mol eq Natriumhydroxid in Form einer 50 Gew.-%igen wässrigen Natronlauge unter Mischen in ca. 10 Minuten auf die Cellulose gesprüht. Über die gesamte Reaktionsphase hinweg wird das Reaktionssystem weiterhin gemischt. Es wird weitere 35 Minuten alkalisiert. Die Dosierung der Lauge und die anschließende Alkalisierung verlaufen unter einen Temperaturanstieg von ca. 28°C auf ca. 38°C. Dann werden 0,66 mol eq Ethylenoxid über ca. 25 min in den Reaktor dosiert. Dabei wird das Gemisch auf 60 bis 63°C geheizt. Nachdem weitere 25 Minuten bei dieser Temperatur gemischt worden ist, wird in 25 min auf 78 bis 82°C geheizt. Anschließend wird weitere 60 Minuten bei dieser Temperatur umgesetzt. Bei dieser Temperatur werden binnen 8 Minuten 2,0 mol eq Chlormethan in den Reaktor dosiert. Anschließend wird für weitere 12 Minuten bei gleicher Temperatur umgesetzt. Die flüchtigen Bestandteile werden abdestilliert und der Reaktor evakuiert.

Das Rohprodukt wird einer Wäsche mit heißem Wasser unterworfen, anschließend getrocknet und gemahlen.

Der Substitutionsgrad der so erhaltenen Methylhydroxyethylcellulose durch Methylgruppen (DS-M) betrug 1,48, der Substitutionsgrad durch Hydroxyethylgruppen (MS-HE) betrug 0,40. Der NaCl-Gehalt betrug 2,3 Gew.-%.

### Beispiel 2:

Wie die Synthese in Beispiel 1, jedoch werden im Anschluss an die Alkalisierung 0,001 mol eq Epichlorhydrin gelöst in 2,5 l Dimethoxyethan binnen 5 Minuten in den Reaktor dosiert.

Der Substitutionsgrad der erhaltenen irreversibel vernetzten Methylhydroxyethylcellulose durch Methylgruppen (DS-M) betrug 1,42, der Substitutionsgrad durch Hydroxyethylgruppen (MS-HE) betrug 0,43. Der NaCl-Gehalt 3,6 Gew.-%.

### Messungen zu den Beispielen

Die Methylhydroxyethylcellulosen (MHEC) aus Beispiel 1 (Messung 1) und Beispiel 2 (Messung 2) wurden in Wasser gelöst: 1,5 Gewichtsteile MHEC und 98,5 Gewichtsteile Wasser.

Das Löseverfahren ist für alle Messungen und Beispiele gleich: Die abgewogene Menge Celluloseether wird in die zuvor abgewogene Menge Lösungsmittel bei Raumtemperatur unter Rühren langsam eingestreut, um die Bildung von Klumpen zu vermeiden. Das als Behälter für die Lösung verwendete runde Glasgefäß wird mit einem Deckel dicht verschlossen und mehrmals mit der Hand geschüttelt, um die noch nicht gelösten Anteile Celluloseether zu verteilen. Der weitere Lösevorgang erfolgt innerhalb von 24 Stunden, wobei das runde Glasgefäß liegend um seine Längsachse langsam gedreht wird. Auf diese Weise werden alle Teile des Innenraums des Glasgefäßes von der Flüssigkeit laufend benetzt.

Nach dem Lösevorgang wird das Glasgefäß mit der Celluloseetherlösung für einige Stunden aufrecht stehen gelassen damit eventuell in der Lösung verteilte Luftblasen aufsteigen und aus der Lösung entweichen können.

Anschließend erfolgt die rheologische Charakterisierung der Celluloseetherlösung; die Prozedur ist für alle Messungen und Beispiele gleich: Direkt vor der Untersuchung mit dem Rheometer wird das Glasgefäß geöffnet und die erforderliche Menge Celluloseetherlösung aus dem Glasgefäß entnommen und in die Messvorrichtung des Rheometers gefüllt. Die Messvorrichtung wird in die zur Durchführung der Messung erforderliche Position gefahren. Vor dem Start der Messung wird die für die Celluloseetherlösung in der Messvorrichtung erforderliche Zeit zum Erreichen einer Temperatur von 20°C abgewartet; die Temperatursteuerung erfolgt entsprechend der Temperaturanzeige des Rheometers. Die Abweichungen auf Grund der Unsicherheit in der Kalibration der Temperaturmessung sind gering und betragen bei einer Temperaturanzeige von 20°C maximal +/- 1°C. Die Schwankung der Temperaturanzeige während der Messung beträgt maximal +/- 0,2°C.

Während der Messung wird die Kreisfrequenz ω in der Weise variiert, dass insgesamt 6 Messpunkte im Bereich ω von 0,1 s$^{-1}$ bis 1 s$^{-1}$ liegen. Die Deformationsamplitude $\gamma_0$ beträgt dabei zwischen 0,0025 und 0,0075, was in allen beobachteten Fällen ausreichend klein war um die Materiafunktionen Speichermodul G' und Verlustmodul G'' sicher im linear-viskoelastischen Bereich zu bestimmen.

Die Ergebnisse der rheologischen Messung 1 für Beispiel 1 (Vergleichsbeispiel) sind in Tabelle 1 aufgeführt:

**Messung 1:**

| Tabelle 1: Linear-viskoelastische Materialfunktionen Speichermodul G' und Verlustmodul G'' in Abhängigkeit von der Kreisfrequenz ω für die Methylhydroxyethylcellulose aus Beispiel 1 (Vergleichsbeispiel) | | |
|---|---|---|
| ω Einheit: s$^{-1}$ | G' Einheit: Pa | G'' Einheit: Pa |
| 0.1 | 6.64 | 13.2 |
| 0.159 | 9.78 | 17.9 |
| 0.251 | 14.8 | 23.4 |
| 0.398 | 21.5 | 30.4 |
| 0.632 | 30.6 | 37.7 |
| 1 | 42.4 | 47.6 |
| Rheometer: Universal Dynamic Spectrometer UDS 200 von der Firma Physica Messtechnik GmbH, Stuttgart, Deutschland Messvorrichtung: Kegel/Platte mit 50 mm Durchmesser, Kegel mit 1° Kegelwinkel und 0,05 mm Abflachung der Kegelspitze | | |

Die weitere Auswertung der Daten erfolgt in der Weise, dass die Exponenten n und m der Beziehungen

(1) G' $\propto \omega^n$ (Speichermodul verhält sich proportional zur Kreisfrequenz hoch n)
und

(2) G'' $\propto \omega^m$ (Verlustmodul verhält sich proportional zur Kreisfrequenz hoch m)

ermittelt werden, indem eine Regressionsanalyse für den Logarithmus des Speichermoduls G' (log G') als Funktion des Logarithmus der Kreisfrequenz ω (log ω) durchgeführt wird wobei die Steigung der Geraden dem Exponenten n entspricht, sowie indem eine Regressionsanalyse für den Logarithmus des Verlustmoduls G'' (log G'') als Funktion des Logarithmus der Kreisfrequenz ω (log ω) durchgeführt wird wobei die Steigung der Geraden dem Exponenten m entspricht. Die Ergebnisse dieser Regressionsanalyse für Beispiel 1 (Vergleichsbeispiel) sind in Tabelle 2 aufgeführt:

| Tabelle 2: Regressionsanalyse für log G' gegen log ω und log G'' gegen log ω für die Methylhydroxyethylcellulose aus Beispiel 1 (Vergleichsbeispiel), Daten für G', G'' und ω aus Tabelle 1 | | | |
|---|---|---|---|
| log ω | log G' | log ω | log G'' |
| -1 | 0.8222 | -1 | 1.1206 |
| -0.7986 | 0.9903 | -0.7986 | 1.2529 |
| -0.6003 | 1.1702 | -0.6003 | 1.3692 |
| -0.4001 | 1.3324 | -0.4001 | 1.4829 |
| -0.1993 | 1.4857 | -0.1993 | 1.5763 |
| 0 | 1.6273 | 0 | 1.6776 |
| Steigung: 0,8107 R: 0,9992 | | Steigung: 0,5528 R: 0,9982 | |

(fortgesetzt)

| Tabelle 2: Regressionsanalyse für log G' gegen log ω und log G" gegen log ω für die Methylhydroxyethylcellulose aus Beispiel 1 (Vergleichsbeispiel), Daten für G', G" und ω aus Tabelle 1 | | | |
|---|---|---|---|
| log ω | log G' | log ω | log G" |
| Die Steigung entspricht dem Exponenten n der Gleichung (1) Die Regression erfolgte nach dem bekannten Prinzip der kleinsten Summe der Fehlerquadrate. R ist ein Koeffizient für die Qualität der Regression und sollte stets größer als 0,95 sein. | | Die Steigung entspricht dem Exponenten m der Gleichung (2) Die Regression erfolgte nach dem bekannten Prinzip der kleinsten Summe der Fehlerquadrate. R ist ein Koeffizient für die Qualität der Regression und sollte stets größer als 0,95 sein. | |
| Für die Methylhydroxyethylcellulose aus Beispiel 1 (Vergleichsbeispiel) ergibt sich somit ein <u>Verhältnis von n zu m von 1,47</u> (0,8107/0,5528); das Produkt besitzt keine gel-artigen rheologischen Eigenschaften. | | | |

**Messung 2:**

Die Ergebnisse der rheologischen Messung 2 für Beispiel 2 sind in Tabelle 3 aufgeführt:

| Tabelle 3: Linear-viskoelastische Materialfunktionen Speichermodul G' und Verlustmodul G" in Abhängigkeit von der Kreisfrequenz ω für die Methylhydroxyethylcellulose aus Beispiel 2 | | |
|---|---|---|
| ω Einheit: $s^{-1}$ | G' Einheit: Pa | G" Einheit: Pa |
| 0.1 | 26.5 | 17.8 |
| 0.159 | 31.6 | 20.9 |
| 0.251 | 38.1 | 25.6 |
| 0.398 | 45.1 | 29.9 |
| 0.632 | 54.3 | 35.7 |
| 1 | 64.5 | 41.3 |
| Rheometer: Universal Dynamic Spectrometer UDS 200 von der Firma Physica Messtechnik GmbH, Stuttgart, Deutschland | | |
| Messvorrichtung: Kegel/Platte mit 50 mm Durchmesser, Kegel mit 1˚ Kegelwinkel und 0,05 mm Abflachung der Kegelspitze | | |

Die Ergebnisse der Regressionsanalyse für Messung 2 sind in Tabelle 4 aufgeführt:

| Tabelle 4: Regressionsanalyse für log G' gegen log ω und log G" gegen log ω für die Methylhydroxyethylcellulose aus Beispiel 2, Daten für G', G" und ω aus Tabelle 3 | | | |
|---|---|---|---|
| log ω | log G' | log ω | log G" |
| -1 | 1.4232 | -1 | 1.2504 |
| -0.7986 | 1.4997 | -0.7986 | 1.3201 |
| -0.6003 | 1.5809 | -0.6003 | 1.4082 |
| -0.4001 | 1.6542 | -0.4001 | 1.4757 |
| -0.1993 | 1.7348 | -0.1993 | 1.5527 |
| 0 | 1.8096 | 0 | 1.6160 |
| Steigung: 0,3873 R: 0,9999 Die Steigung entspricht dem Exponenten | | Steigung: 0,3706 R: 0,9991 Die Steigung entspricht dem Exponenten | |

(fortgesetzt)

| log ω | log G' | log ω | log G" |
|---|---|---|---|
| Tabelle 4: Regressionsanalyse für log G' gegen log ω und log G" gegen log ω für die Methylhydroxyethylcellulose aus Beispiel 2, Daten für G', G" und ω aus Tabelle 3 | | | |
| n der Gleichung (1) | | m der Gleichung (2) | |
| Die Regression erfolgte nach dem bekannten Prinzip der kleinsten Summe der Fehlerquadrate. R ist ein Koeffizient für die Qualität der Regression und sollte stets größer als 0,95 sein. | | Die Regression erfolgte nach dem bekannten Prinzip der kleinsten Summe der Fehlerquadrate. R ist ein Koeffizient für die Qualität der Regression und sollte stets größer als 0,95 sein. | |
| Für die Methylhydroxyethylcellulose aus Beispiel 2 ergibt sich somit ein Verhältnis von n zu m von 1,05 (0,3873/0,3706). Das Produkt besitzt gel-artige rheologische Eigenschaften. | | | |

**Beispiel 3:**

In einem 400 l Autoklaven werden 17,8 kg gemahlener Holzzellstoff (Feuchte: 4,2 Gew.-%; GVZ in Cuen: 1194 ml/g) und 17,5 kg gemahlene Baumwoll-Linters (Feuchte: 5,3 Gew.-%; GVZ in Cuen: 1343 ml/g) durch Evakuieren und Beaufschlagen mit Stickstoff inertisiert. Anschließend wird ein Gemisch aus 65,4 kg Dimethylether und 16,2 kg Chlormethan in den Reaktor dosiert. Zusätzlich werden 0,003 mol eq Epichlorhydrin gelöst in 5 kg Chlormethan in den Reaktor dosiert. Dann werden 2,5 mol eq Natriumhydroxid in Form einer 50 Gew.-%igen wässrigen Natronlauge unter Mischen in ca. 10 Minuten auf die Cellulose gesprüht. Über die gesamte Reaktionsphase hinweg wird das Reaktionssystem weiterhin gemischt. Es wird weitere 25 Minuten alkalisiert. Die Dosierung der Lauge und die anschließende Alkalisierung verlaufen unter einem Temperaturanstieg von ca. 25°C auf ca. 38°C. Das Gemisch wird dann binnen 55 Minuten auf 80 bis 85°C geheizt und anschließend für 80 Minuten bei dieser Temperatur gehalten, wobei ab ca. 58°C 2,5 mol eq Propylenoxid über ca. 80 min in den Reaktor dosiert werden. Dann wird bei gleicher Temperatur 37,1 kg Chlormethan binnen 30 Minuten in den Reaktor dosiert. Es wird weitere 10 Minuten bei gleicher Temperatur gehalten und dann weitere 2,0 mol eq Natriumhydroxid in Form einer 50 Gew.-%igen wässrigen Natronlauge in ca. 60 Minuten in das Reaktionsgemisch gesprüht. Anschließend wird weitere 30 Minuten bei dieser Temperatur umgesetzt. Die flüchtigen Bestandteile werden abdestilliert und der Reaktor evakuiert.

Das Rohprodukt wird einer Wäsche mit heißem Wasser unterworfen, anschließend getrocknet und gemahlen.

Der Substitutionsgrad der so erhaltenen irreversibel vernetzten Methylhydroxypropylcellulose (MHPC) durch Methylgruppen (DS-M) betrug 1,83, der Substitutionsgrad durch Hydroxypropylgruppen (MS-HP) betrug 0,97. Der NaCl-Gehalt betrug 0,7 Gew.-%.

**Messung 3:**

Die Methylhydroxypropylcellulose aus Beispiel 3 wurde in Wasser gelöst: 1,5 Gewichtsteile MHPC und 98,5 Gewichtsteile Wasser. Die rheologische Messung wurde wie beschrieben durchgeführt aber mit einem Rheometer Modell RS 600 der Firma Thermo Haake GmbH, Karlsruhe, Deutschland mit einer Kegel/Platte Messvorrichtung mit 60 mm Durchmesser, Kegel mit 1° Kegelwinkel und 0,05 mm Abflachung der Kegelspitze. Die Auswertung ergab ein Verhältnis von n zu m von 1,14.

**Messung 4:**

Die MHPC aus Beispiel 3 wurde in einem Lösungsmittel aus 98 Gewichtsteilen Wasser und 2 Gewichtsteilen Natriumhydroxid je 100 Gewichtsteilen Lösungsmittel gelöst: 1,5 Gewichtsteile MHPC und 98,5 Gewichtsteile Lösungsmittel. Die rheologische Messung wurde durchgeführt wie in Messung 3 beschrieben. Die Auswertung ergab ein Verhältnis von n zu m von 0,95.

**Messung 5:**

Die MHEC aus Beispiel 2 wurde in einem Lösungsmittel aus 98 Gewichtsteilen Wasser und 2 Gewichtsteilen Natriumhydroxid je 100 Gewichtsteilen Lösungsmittel gelöst: 1,5 Gewichtsteile MHEC und 98,5 Gewichtsteile Lösungsmittel. Die rheologische Messung wurde durchgeführt wie in Messung 2 beschrieben. Die Auswertung ergab ein Verhältnis von n zu m von 1,03.

Der Vergleich von Messung 3 und Messung 4 zeigt, dass die MHPC aus Beispiel 3, für die an Hand einer Lösung in Wasser gel-artige Eigenschaften gefunden wurden (n/m = 1,14), auch in einer Lösung in einem Lösungsmittel aus 98 Gewichtsteilen Wasser und 2 Gewichtsteilen Natriumhydroxid je 100 Gewichtsteilen Lösungsmittel gel-artige Eigenschaften besitzt (n/m = 0,95). Der Mittelwert des Verhältnisses von n zu m aus beiden Lösungsmitteln beträgt 1,045. Die Differenz der Verhältnisse von n zu m aus beiden Lösungsmitteln beträgt 0,19; diese Differenz entspricht ca. 18 von 100 bezogen auf den Mittelwert aus den Verhältnissen von n zu m für die beiden Lösungsmittel.

Der Vergleich von Messung 2 und Messung 5 zeigt, dass die MHEC aus Beispiel 2, für die an Hand einer Lösung in Wasser gel-artige Eigenschaften gefunden wurden (n/m = 1,05), auch in einer Lösung in einem Lösungsmittel aus 98 Gewichtsteilen Wasser und 2 Gewichtsteilen Natriumhydroxid je 100 Gewichtsteilen Lösungsmittel gel-artige Eigenschaften besitzt (n/m = 1,03). Der Mittelwert des Verhältnisses von n zu m aus beiden Lösungsmitteln beträgt 1,04. Die Differenz der Verhältnisse von n zu m aus beiden Lösungsmitteln beträgt 0,02; diese Differenz entspricht ca. 2 von 100 bezogen auf den Mittelwert aus den Verhältnissen von n zu m für die beiden Lösungsmittel.

**Patentansprüche**

1. Celluloseether mit gel-artigen rheologischen Eigenschaften in wässriger Lösung, **dadurch** erhältlich, dass man

   a) Cellulose mit wässriger Alkalihydroxid-Lösung in Gegenwart eines Suspensionsmittels alkalisiert,
   b) die alkalisierte Cellulose mit einem oder mehreren Alkylenoxiden reagieren lässt,
   c) dann mit einem im Suspensionsmittel enthaltenen Alkylhalogenid umsetzt,
   d) anschließend oder gleichzeitig die alkalisierte Cellulose mit einem Vernetzungsmittel in einer Menge von 0,0001 bis 0.005 eq, wobei die Einheit "eq" für das molare Verhältnis des Vernetzungsmittels relativ zur Anhydroglucoseeinheit (AGU) der eingesetzten Cellulose steht, umsetzt und
   e) nach gegebenenfalls weiterer Zugabe von Alkalihydroxid und/oder Alkylierungsmittel das erhaltene irreversibel vernetzte Cellulosederivat aus dem Reaktionsgemisch abtrennt, gegebenenfalls reinigt und trocknet.

2. Cellulosederivat nach Anspruch 1, **dadurch gekennzeichnet, dass** als Vernetzungsmittel ein oder mehrere bifunktionelle Reagenzien eingesetzt werden.

3. Cellulosederivat nach Anspruch 1, **dadurch gekennzeichnet, dass** als Vernetzungsmittel Epichlorhydrin eingesetzt wird.

4. Celluloseether nach einem der Ansprüche 1 bis 3, **dadurch gekennzeichnet, dass** das rheologische Profil in wässriger Lösung der Celluloseether **dadurch** charakterisiert ist, dass die linear-viskoelastischen Materialfunktionen Speichermodul G' und Verlustmodul G" einer Lösung aus 1,5 bis 2,0 Gewichtsteilen des Celluloseethers auf 100 Gewichtsteile Lösung bei einer Temperatur von 20° C +/- 1° C, und bei Verwendung von Wasser ohne weitere Zusätze als Lösungsmittel, im Bereich der Kreisfrequenz w von $0,1 \text{ s}^{-1}$ bis $1 \text{ s}^{-1}$ in der Weise von der Kreisfrequenz abhängen, dass die Exponenten n und m der Beziehungen
   $G' \propto \omega^n$ (Speichermodul verhält sich proportional zur Kreisfrequenz hoch n) und
   $G" \propto \omega^m$ (Verlustmodul verhält sich proportional zur Kreisfrequenz hoch m) in etwa gleich groß sind, wobei für die Celluloseether nach dieser Erfindung das Verhältnis von n zu m von 0,80 bis 1,20 beträgt.

5. Celluloseether nach Anspruch 4, **dadurch gekennzeichnet, dass** die linear-viskoelastischen Materialfunktionen Speichermodul G' und Verlustmodul G" einer Lösung aus 1,5 bis 2,0 Gewichtsteilen des Celluloseethers auf 100 Gewichtsteile Lösung bei einer Temperatur von 20° C +/- 1° C, und bei Verwendung eines Lösungsmittels aus 98 Gewichtsteilen Wasser und 2 Gewichtsteilen Natriumhydroxid je 100 Gewichtsteilen Lösungsmittel, im Bereich der Kreisfrequenz w von $0,1 \text{ s}^{-1}$ bis $1 \text{ s}^{-1}$ in der Weise von der Kreisfrequenz abhängen, dass die Exponenten n und m der Beziehungen
   $G' \propto \omega^n$ (Speichermodul verhält sich proportional zur Kreisfrequenz hoch n) und
   $G" \propto \omega^m$ (Verlustmodul verhält sich proportional zur Kreisfrequenz hoch m) in etwa gleich groß sind, wobei für die Celluloseether nach dieser Erfindung das Verhältnis von n zu m von 0,80 bis 1,20 beträgt.

6. Celluloseether nach einem der Ansprüche 4 oder 5, **dadurch gekennzeichnet, dass** die Auswahl der Lösungsmittel

   A: Wasser
   oder
   B: 98 Gewichtsteile Wasser und 2 Gewichtsteile Natriumhydroxid je 100 Gewichtsteilen Lösungsmittel

sich nur wenig auf das Verhältnis der beiden Exponenten n und m auswirkt,

wobei die Differenz des Verhältnisses von n zu m im Lösungsmittel A zum Verhältnis von n zu m im Lösungsmittel B unter ansonsten identischen Bedingungen weniger beträgt als 20 von 100 des Mittelwertes aus dem Verhältnis von n zu m im Lösungsmittel A und dem Verhältnis von n zu m im Lösungsmittel B.

**7.** Cellulosederivat nach einem der Ansprüche 1-6, **dadurch gekennzeichnet, dass** das Cellulosederivat ein Methylhydroxypropylcellulosederivat oder ein Methylhydroxyethylcellulosederivat ist.

**8.** Verfahren zur Herstellung eines Cellulosederivates gemäss einem der Ansprüche 1-7, **dadurch gekennzeichnet, dass** man

a) Cellulose mit wässriger Alkalihydroxid-Lösung in Gegenwart eines Suspensionsmittels alkalisiert,
b) die alkalisierte Cellulose mit einem oder mehreren Alkylenoxiden reagieren lässt,
c) dann mit einem im Suspensionsmittel enthaltenen Alkylhalogenid umsetzt,
d) anschließend oder gleichzeitig die alkalisierte Cellulose mit einem Vernetzungsmittel in einer Menge von 0.0001 bis 0.005 eq, wobei die Einheit "eq" für das molare Verhältnis des Vernetzungsmittel relativ zur Anhydroglucoseeinheit (AGU) der eingesetzten Cellulose steht, umsetzt,
e) und gegebenenfalls nach weiterem Einsatz von Alkalihydroxid, und/oder Alkylierungsmittel das erhaltene irreversibel vernetzte Cellulosederivat aus dem Reaktionsgemisch abtrennt, gegebenenfalls reinigt und trocknet.

**9.** Verfahren nach Anspruch 8, **dadurch gekennzeichnet, dass** man in Schritt a) die Cellulose mit wässriger Alkalihydroxid-Lösung, in Gegenwart eines Suspensionsmittels, welches Alkylhalogenid in der nach folgender Formel berechneten Menge: [Equivalente Alkalihydroxid pro AGU minus 1,4] bis [Equivalente Alkalihydroxid pro AGU plus 0,8] enthält, alkalisiert, und in Schritt e) Alkylhalogenid in einer Menge aus mindestens der Differenz zwischen der bereits zudosierten Menge an Equivalenten Alkylhalogenid pro AGU und der insgesamt zudosierten Menge Alkalihydroxid pro AGU, wobei diese Menge minimal 0,2 Equivalente pro AGU beträgt, zugibt und gegebenenfalls weitere Alkalihydroxid-Lösung.

**10.** Verfahren nach einem der Ansprüche 8 bis 9, **dadurch gekennzeichnet, dass** das Alkylhalogenid Methylchlorid ist.

**11.** Verfahren nach einem der Ansprüche 8 bis 10, **dadurch gekennzeichnet, dass** das Vernetzungsmittel in Methylchlorid oder einem Methylchlorid/Dimethylether-Gemisch gelöst ist.

**Claims**

**1.** Cellulose ether having gel-like rheological properties in aqueous solution, which can be obtained in that one

a) renders cellulose alkaline with alkali hydroxide solution in the presence of a suspension medium,
b) causes the alkalized cellulose to react with one or more alkylene oxides,
c) then reacts with suspension medium containing alkyl halide,
d) subsequently or simultaneously, reacts the alkalized cellulose with a crosslinking agent in an amount of 0.0001 to 0.005 eq, where "eq" represents the molar ratio of the crosslinking agent relative to the anhydroglucose unit (AGU) of the cellulose used, and
e) after the further addition, if appropriate, of alkali hydroxide and/or alkylating agent, separates out the irreversibly crosslinked cellulose derivative obtained from the reaction mixture, if appropriate purifying and drying.

**2.** Cellulose derivative according to Claim 1, **characterized in that** the crosslinking agent used is one or more bifunctional reagents.

**3.** Cellulose derivative according to Claim 1, **characterized in that** the crosslinking agent used is epichlorohydrin.

**4.** Cellulose ether according to one of Claims 1 to 3, **characterized in that** the rheological profile of the cellulose ether in aqueous solution is **characterized in that** the linear-viscoelastic material functions storage modulus G' and loss modulus G" of a solution of 1.5 to 2.0 parts by weight of the cellulose ether in 100 parts by weight of solution at a temperature of 20°C +/- 1°C and when water without further additives is used as solvent, in the range of the angular frequency $\omega$ from $0.1\ s^{-1}$ to $1\ s^{-1}$, depend on the angular frequency in such a way that the exponents n and m in the relationships

$G' \propto \omega^n$ (storage modulus is proportional to the angular frequency to the power n)

and

$G'' \propto \omega^m$ (loss modulus is proportional to the angular frequency to the power m)

are approximately equal, the ratio of n to m being from 0.80 to 1.20 for the cellulose ether according to this invention.

5. Cellulose ether according to Claim 4, **characterized in that** the linear-viscoelastic material functions storage modulus G' and loss modulus G'' of a solution of 1.5 to 2.0 parts by weight of the cellulose ether in 100 parts by weight of solution at a temperature of 20˚C +/- 1˚C and when a solvent comprising 98 parts by weight of water and 2 parts by weight of sodium hydroxide per 100 parts solvent is used, in the range of the angular frequency $\omega$ from $0.1$ $s^{-1}$ to $1$ $s^{-1}$, depend on the angular frequency in such a way that the exponents n and m in the relationships

$G' \propto \omega^n$ (storage modulus is proportional to the angular frequency to the power n)

and

$G'' \propto \omega^m$ (loss modulus is proportional to the angular frequency to the power m)

are approximately equal, the ratio of n to m being from 0.80 to 1.20 for the cellulose ether according to this invention.

6. Cellulose ether according to either of Claims 4 and 5, **characterized in that** the selection of the solvent

   A: water
   or
   B: 98 parts by weight of water and 2 parts by weight of sodium hydroxide per 100 parts by weight of solvent

   has little effect on the ratio of the two exponents n and m, the difference between the ratio of n to m in solvent A and the ratio of n to m in solvent B under otherwise identical conditions being less than 20 per cent of the mean of the ratio of n to m in solvent A and the ratio of n to m in solvent B.

7. Cellulose derivative according to one of Claims 1-6, **characterized in that** the cellulose derivative is a methylhydroxypropyl cellulose derivative or a methylhydroxyethyl cellulose derivative.

8. Process for making a cellulose derivative according to one of Claims 1-7, **characterized in that**

   a) cellulose is rendered alkaline with aqueous alkali hydroxide solution in the presence of a suspension medium,
   b) the alkalized cellulose is caused to react with one or more alkylene oxides,
   c) then reacted with alkyl halide contained in the suspension medium,
   d) subsequently or simultaneously, the alkalized cellulose is reacted with a crosslinking agent in an amount of 0.0001 to 0.005 eq, where "eq" represents the molar ratio of the crosslinking agent relative to the anhydroglucose unit (AGU) of the cellulose used, and
   e) after the further addition, if appropriate, of alkali hydroxide and/or alkylating agent, the irreversibly crosslinked cellulose derivative obtained is separated out from the reaction mixture, if appropriate purified and dried.

9. Process according to Claim 8, **characterized in that** in step a) the cellulose is rendered alkaline with aqueous alkali hydroxide solution in the presence of a suspension medium which contains alkyl halide in the amount calculated in accordance with the following formula: [equivalent alkali hydroxide per AGU minus 1.4] to [equivalent alkali hydroxide per AGU plus 0.8], and in step e) alkyl halide is added in an amount of at least the difference between the amount of equivalent alkyl halide per AGU already metered in and the total amount of alkali hydroxide per AGU metered in, where this amount is at least 0.2 equivalents per AGU, and, if appropriate, further alkali hydroxide solution is added.

10. Process according to either of Claims 8 and 9, **characterized in that** the alkali halide is methyl chloride.

11. Process according to one of Claims 8 to 10, **characterized in that** the crosslinking agent is dissolved in methyl chloride or a methyl chloride/dimethyl ether mixture.

**Revendications**

1. Ether de cellulose qui présente, en solution aqueuse, les propriétés rhéologiques d'un gel et qu'on peut obtenir de la manière suivante :

   a) on alcalinise de la cellulose avec une solution aqueuse d'un hydroxyde alcalin, en présence d'un agent de mise en suspension,
   b) on fait réagir cette cellulose alcalinisée avec un ou plusieurs oxydes d'alkylène,
   c) on la fait ensuite réagir avec un halogénure d'alkyle compris dans l'agent de mise en suspension,
   d) on fait réagir la cellulose alcalinisée, ensuite ou en même temps, avec un agent de réticulation, employé en une quantité de 0,0001 à 0,005 éq (équivalent), cette unité "éq" désignant le rapport molaire de l'agent de réticulation au motif anhydroglucose (AG) de la cellulose mise en jeu,
   e) et après avoir, en option, ajouté un supplément d'hydroxyde alcalin et/ou d'agent d'alkylation, on sépare du mélange réactionnel le dérivé de cellulose irréversiblement réticulé ainsi obtenu, et le cas échéant, on le purifie et on le fait sécher.

2. Dérivé de cellulose conforme à la revendication 1, **caractérisé en ce qu'**on utilise, en tant qu'agent de réticulation, un ou plusieurs réactifs bifonctionnels.

3. Dérivé de cellulose conforme à la revendication 1, **caractérisé en ce qu'**on utilise de l'épichlorhydrine en tant qu'agent de réticulation.

4. Ether de cellulose conforme à l'une des revendications 1 à 3, **caractérisé en ce qu'**il présente, en solution aqueuse, un profil rhéologique qui se caractérise en ceci que les paramètres définissant le comportement viscoélastique linéaire du matériau, à savoir le module de conservation G' et le module de perte G" d'une solution constituée de 1,5 à 2,0 parties en poids d'éther de cellulose pour 100 parties en poids de solution, pour laquelle on utilise comme solvant de l'eau sans autres adjuvants, à une température de $20 \pm 1$ ˚C, dépendent de la pulsation $\omega$, quand celle-ci vaut de 0,1 à 1 $s^{-1}$, de telle sorte que les exposants n et m des relations :

   $G' \propto \omega^n$ (autrement dit, le module de conservation est proportionnel à la puissance n-ième de la pulsation)
   et $G" \propto \omega^m$ (autrement dit, le module de perte est proportionnel à la puissance m-ième de la pulsation)

   soient à peu près égaux, le rapport de l'exposant n à l'exposant m valant de 0,80 à 1,20 dans le cas d'un éther de cellulose de l'invention.

5. Ether de cellulose conforme à la revendication 4, **caractérisé en ce que** les paramètres définissant le comportement viscoélastique linéaire du matériau, à savoir le module de conservation G' et le module de perte G" d'une solution constituée de 1,5 à 2,0 parties en poids d'éther de cellulose pour 100 parties en poids de solution, pour laquelle on utilise un solvant constitué de 98 parties en poids d'eau et de 2 parties en poids d'hydroxyde de sodium pour 100 parties en poids de solvant, à une température de $20 \pm 1$ ˚C, dépendent de la pulsation $\omega$, quand celle-ci vaut de 0,1 à 1 $s^{-1}$, de telle sorte que les exposants n et m des relations :

   $G' \propto \omega^n$ (autrement dit, le module de conservation est proportionnel à la puissance n-ième de la pulsation)
   et $G" \propto \omega^m$ (autrement dit, le module de perte est proportionnel à la puissance m-ième de la pulsation)

   soient à peu près égaux, le rapport de l'exposant n à l'exposant m valant de 0,80 à 1,20 dans le cas d'un éther de cellulose de l'invention.

6. Ether de cellulose conforme à la revendication 4 ou 5, **caractérisé en ce que** le choix du solvant A ou B :

   A : eau
   B : 98 parties en poids d'eau et 2 parties en poids d'hydroxyde de sodium, pour 100 parties en poids de solvant

   n'a que peu d'influence sur le rapport des deux exposants n et m, la différence entre la valeur du rapport n/m dans le solvant A et la valeur du rapport n/m dans le solvant B, déterminées dans des conditions par ailleurs identiques, vaut moins de 20 % de la moyenne des valeurs du rapport n/m dans le solvant A et dans le solvant B.

7. Dérivé de cellulose conforme à l'une des revendications 1 à 6, **caractérisé en ce que** ce dérivé de cellulose est un dérivé de type méthyl-hydroxypropyl-cellulose ou méthyl-hydroxyéthyl-cellulose.

8. Procédé de préparation d'un dérivé de cellulose conforme à l'une des revendications 1 à 7, **caractérisé en ce que** :

   a) on alcalinise de la cellulose avec une solution aqueuse d'un hydroxyde alcalin, en présence d'un agent de mise en suspension,
   b) on fait réagir cette cellulose alcalinisée avec un ou plusieurs oxydes d'alkylène,
   c) on la fait ensuite réagir avec un halogénure d'alkyle compris dans l'agent de mise en suspension,
   d) on fait réagir la cellulose alcalinisée, ensuite ou en même temps, avec un agent de réticulation, employé en une quantité de 0,0001 à 0,005 éq (équivalent), cette unité "éq" désignant le rapport molaire de l'agent de réticulation au motif anhydroglucose (AG) de la cellulose mise en jeu,
   e) et après avoir, en option, ajouté un supplément d'hydroxyde alcalin et/ou d'agent d'alkylation, on sépare du mélange réactionnel le dérivé de cellulose irréversiblement réticulé ainsi obtenu, et le cas échéant, on le purifie et on le fait sécher.

9. Procédé conforme à la revendication 8, **caractérisé en ce que**, dans l'étape (a), on alcalinise la cellulose avec une solution aqueuse d'hydroxyde alcalin, en présence d'un agent de mise en suspension qui contient un halogénure d'alkyle en une quantité calculée selon ce qui suit :

   du nombre d'équivalents d'hydroxyde alcalin par motif AG
   diminué de 1,4 au nombre d'équivalents d'hydroxyde alcalin par motif AG augmenté de 0,8

   et dans l'étape (e), on ajoute de l'halogénure d'alkyle en une quantité d'au moins la différence entre la quantité déjà ajoutée, en équivalents d'halogénure d'alkyle par motif AG, et la quantité totale ajoutée d'hydroxyde alcalin par motif AG, cette quantité valant au moins 0,2 équivalent par motif AG, et l'on ajoute éventuellement un supplément de solution d'hydroxyde alcalin.

10. Procédé conforme à la revendication 8 ou 9, **caractérisé en ce que** l'halogénure d'alkyle est du chlorure de méthyle.

11. Procédé conforme à l'une des revendications 8 à 10, **caractérisé en ce que** l'agent de réticulation est dissous dans du chlorure de méthyle ou dans un mélange de chlorure de méthyle et d'éther diméthylique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 513917 A

- US 4321367 A

**In der Beschreibung aufgeführte Nicht-Patentliteratur**

- **N. Sarkar.** Kinetics of thermal gelation of methylcellulose and hydroxypropylmethylcellulose in aqueous solutions. *Carbohydrate Polymers,* 1995, vol. 26, 195-203

- **F. Chambon ; H. H., Winter.** Linear Viscoelasticity at the Gel Point of a Crosslinking PDMS with Imbalanced Stoichometry. *Journal of Rheology,* 1987, vol. 31 (8), 683-697
- **G. Bartelmus ; R. Ketterer.** Z. Anal. Chem., 1977, vol. 286, 161-190